# EUROPEAN PATENT SPECIFICATION

(11) **EP 4 347 221 B1**
(45) Date of publication and mention of the grant of the patent: **26.02.2025**
(21) Application number: 21746645.7
(22) Date of filing: 05.07.2021
(51) Int. Cl.: B29C 64/153, B29C 64/277, B29C 64/295, B33Y 40/00, B22F 10/28, B22F 10/50, B22F 12/10, B22F 12/13, B22F 12/17, B22F 12/42, B22F 12/45, B33Y 10/00, B33Y 30/00

(54) **HEAT TRANSFER DEVICE FOR ADDITIVE MANUFACTURING**
WÄRMEÜBERTRAGUNGSVORRICHTUNG ZUR GENERATIVEN FERTIGUNG
DISPOSITIF DE TRANSFERT DE CHALEUR POUR FABRICATION ADDITIVE

(30) Priority: 24.05.2021 IT 202100013400
(43) Date of publication of application: 10.04.2024
(73) Proprietor: Prima Additive S.r.l., 10128 Torino (TO) (IT)
(72) Inventor: FERRARIO, Fabio, 10128 Torino (IT)
(74) Representative: Garavelli, Paolo
(86) International application number: PCT/EP2021/068444
(87) International publication number: WO 2022/248069

(56) References cited:
- WO-A1-2019/143324
- DE-A1- 102014 204 580
- US-A1- 2021 016 350

## Description

The present invention refers to a heat transfer device for additive manufacturing, in accordance with claim 1. In particular, a heat transfer device for additive manufacturing with powder bed fusion or powder bed technology is illustrated.

Additive manufacturing (AM) is a set of additive manufacturing processes starting from digital models, as opposed to traditional subtractive techniques (machining for chip removal, cutting and drilling); using a 3D CAD model that is divided into layers by a software integrated in the machine control system, or by online services, a scheme of resulting layers is obtained that will be processed by the machine tool for the deposition process, or sintering, of different types of materials, in particular metals, plastics or composite components.

The main feature of this technology is that it is a production process that allows components to be made with geometry very close to that of the final component, as required by the project drawing. In the AM family, some different technologies can be identified, such as the selective melting/sintering of a powder bed using a laser beam (Selective Laser Beam Melting - SLBM or Selective Laser Beam Sintering - SLBS or also known as Powder Bed Fusion or PBF), metal deposition through laser beam (Laser Beam Metal Deposition - LBMD) and Selective Electron Beam Melting - SEBM.

In the powder bed or PBF technology, the laser beam is used as a high power density heat source, necessary to melt the metal powders only in certain zones or predetermined areas, in which compact material must be obtained for the construction of the three-dimensional component. The advantage linked to the use of a laser beam is that it can be focused on small dimensions or spots, typically of the order of 30 µm in diameter, and therefore guarantees high power densities that lead to a rapid melting of the powder and to a good level of precision, in terms of surface finish, of the part to be made. These features have allowed access to the industrial market of powder bed technology, for the production of components in different sectors, from aerospace to medical, from automotive to jewelry. In particular, compared to traditional production technologies, it is possible to achieve very high levels of component customization, given the great flexibility of the powder bed technology.

During the production process, the fusion of a layer takes place through the use of a laser source and in some cases the power of the laser source is not sufficient to melt the layers of powder unless defects and stress are formed. residues, to the detriment of the productivity of the system.

The manufacturing process depends mainly on the radiation-matter interaction or on the absorption properties of the materials of the energy of electromagnetic radiation and on the temperature of the powder bed; in particular, the absorption properties of a material include parameters such as density, thermal conductivity, specific heat and emissivity, and vary according to the temperature of the material itself, which in the additive manufacturing technology in powder bed or powder bed fusion, determines the processing process of the material.

The choice of process parameters such as the laser power, the laser scanning speed on the powder bed, the shape of the laser beam and the material used influence the structural and surface quality of the components produced and the productivity of the system, which becomes decisive for the use of this type of machinery in the industrial field, especially in sectors currently covered by foundry and/or hot molding and/or die casting thanks also to the advantages such as high spatial resolution, capillary process control and the ability to perform a pre-processing of the powder bed and post processing of the freshly melted material.

The melting process takes place by means of one or more laser sources inside a working chamber with the aid of a plurality of optical and/or scanning systems and in an environment with an atmosphere of an inert gas (for example nitrogen, argon, etc.), inside which there are some handling devices that allow to control the adduction of the powder and therefore to guarantee the realization of the component, the aspiration of fumes deriving from the selective melting process and the injection of gas to support the production process.

The use of additional electromagnetic radiation sources allows to heat the surface in which the final component will be generated, and also the dust, in order to use low-powered lasers and reduce mechanical stresses inside the layers of the final component.

Many systems are known in the art for heating the powder of an additive manufacturing system, such as for example in EP-A1-3010673 relating to an apparatus for the production of a component by melting powder layers, comprising a system for heating the powder by means of microwaves and/or IR radiation and/or UV radiation in the coater, or in EP-A1-3200942 relating to a system for controlling the temperature of the powder bed by means of microwaves in order to regulate the conduction of heat during the solidification phase, or in EP-A1-3285988 relating to a radiative system placed under the plate where the powder is deposited, to heat the latter, or in WO-A1-2019185642 concerning a method for the realization of a three-dimensional object in which the solidification process of the powder takes place through a beam of electrons and it also includes a radiation source to reduce the electrostatic charge n in the area of incidence of the electron beam which may include a UV lamp and in WO-A1-2019091801 relating to a radiative system with lamps in the IR to heat the plate on which the powder is placed from below.

The main disadvantage of the prior art relates to systems in which the devices comprise heating means which can operate before, during but for example not after the activation of the laser beams for the powder melting/sintering process, as well as not being able to heat the surface layer of the work plate.

Furthermore, these are devices that are not easily scalable as regards the sources suitable for heating the plate and/or the laser metal powder, in particular as regards the localized processing of the layers in the powder bed.

Documents DE-A1-10 2014 204580, US-A1-2021/016350 and WO-A1-2019/143324 disclose prior art heat transfer devices.

Object of the present invention is solving the aforementioned prior art problems by means of a heat transfer device for additive manufacturing, consisting of a scalable system that allows the use of multiple laser sources that generate electromagnetic radiation beams located along the pre-established processing area, able to operate with a certain degree of freedom on each area of competence, guaranteeing a high quality of the object to be created combined with a high production rate.

Another object of the present invention is the reduction of the melting time, to the advantage of better mechanical properties of the final piece and the reduction of the cycle time and the increase in the quality of the final product.

The above and other objects and advantages of the invention, as will emerge from the following description, are achieved with a heat transfer device for additive manufacturing such as the one described in claim 1. Preferred embodiments and non-trivial variants of the present invention form the subject of the dependent claims.

It is understood that all attached claims form an integral part of the present description.

It will be immediately obvious that innumerable variations and modifications (for example relating to shape, dimensions, arrangements and parts with equivalent functionality) can be made to what is described without departing from the scope of the invention as appears from the attached claims.

The present invention will be better described by some preferred embodiments, provided by way of 7 non-limiting example, with reference to the attached drawings, in which:
- FIG. 1 shows the heat transfer device for additive manufacturing (100), according to the present invention;
- FIG. 2 shows a view of the arrangement of the laser sources of the heat transfer device for additive manufacturing (100), according to the present invention;
- FIG. 3 shows a side view of the LED trajectories in the corresponding working areas of the heat transfer device for additive manufacturing (100), according to the present invention; and

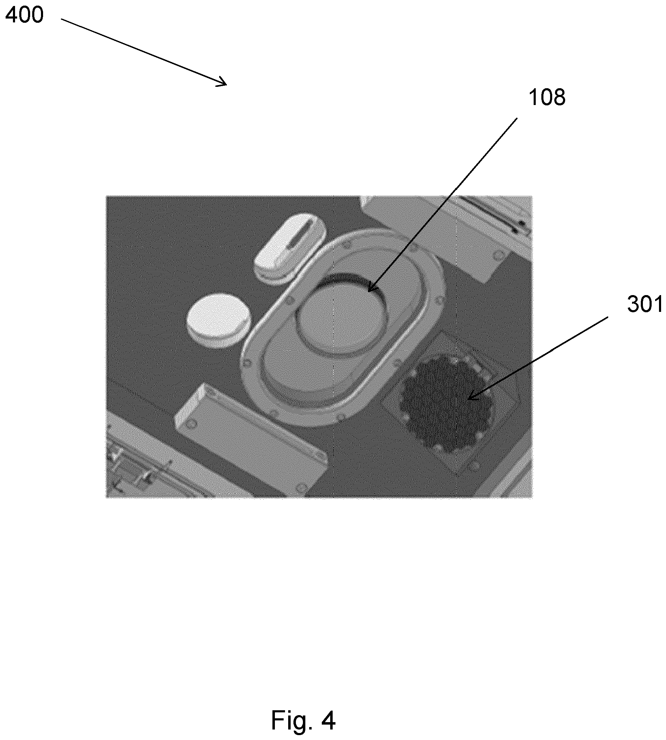

- FIG. 4 shows the detail of the LEDs of the heat transfer device for additive manufacturing (100), according to the present invention.

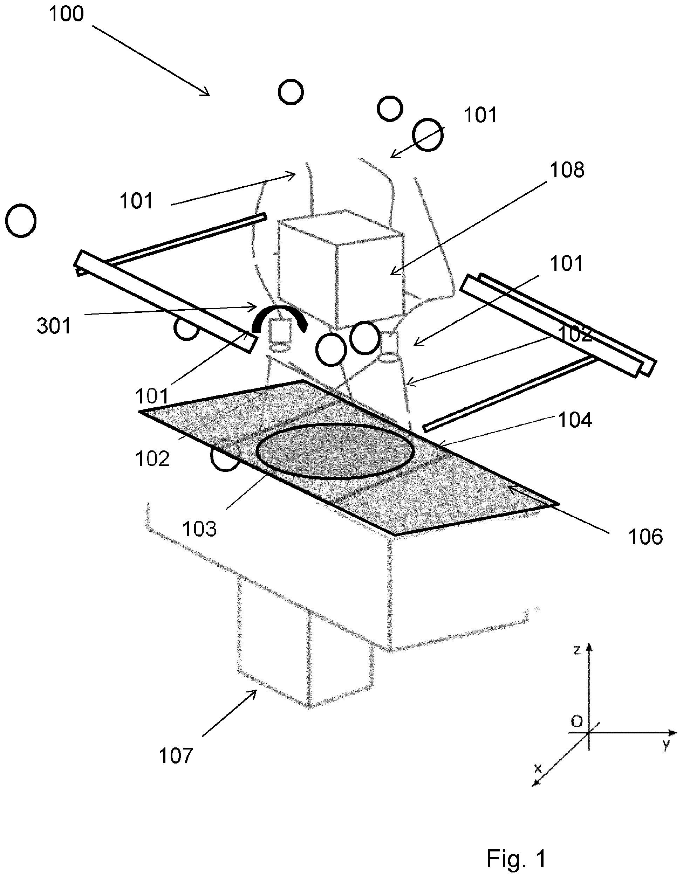

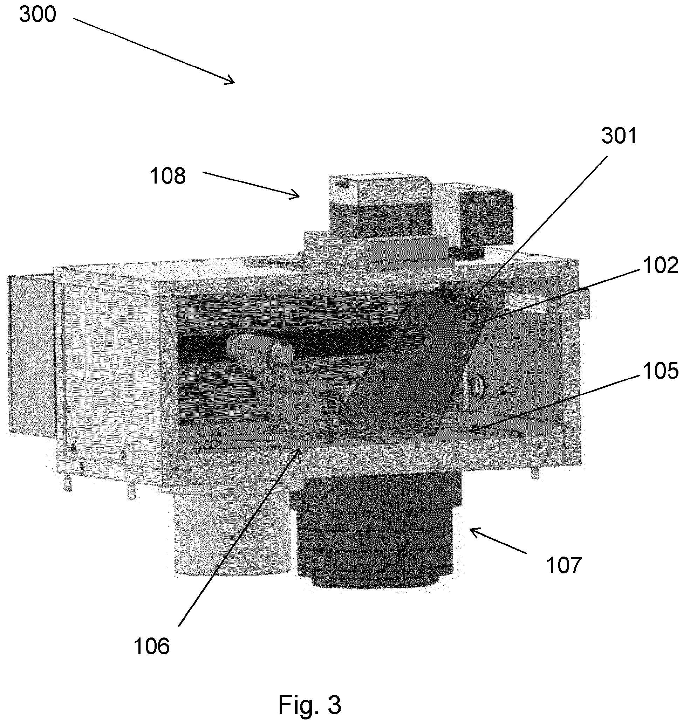

The heat transfer device for additive manufacturing (100) is designed to be used inside a working chamber in an environment with an atmosphere of an inert gas (for example nitrogen, argon, etc.) and consists of multiple independent laser sources and an array of LED diodes designed to convey the electromagnetic radiation in the pre-established work area, said heat transfer device for additive manufacturing (100) being scalable and able to operate independently on each sector of competence, guaranteeing a high quality of the object to be made combined with a high production rate; it consists of a set of independent sources (101) capable of generating heat and designed to convey the electromagnetic radiation beams (102) in a predetermined area (103) of the plate (104) of a work surface (105), said independent sources (101) capable of varying the temperature of said predetermined area (103) of said plate (104) in said work surface (105) by introducing a thermal gradient, said independent sources (101) being connected on the sides of the optical deflection system (108), and an array of power LEDs (301) adjacent to the optical deflection system (108), capable of varying the temperature of the metal powders positioned in said work surface (105), as can be seen from Figures 1 and 3.

Advantageously, as can be seen from Figure 1, said independent sources (101) are scalable and modular in multiple systems (201) connected to the optical deflection system (108) and sized according to the work area, in said work plane (105), necessary to implement the additive manufacturing process.

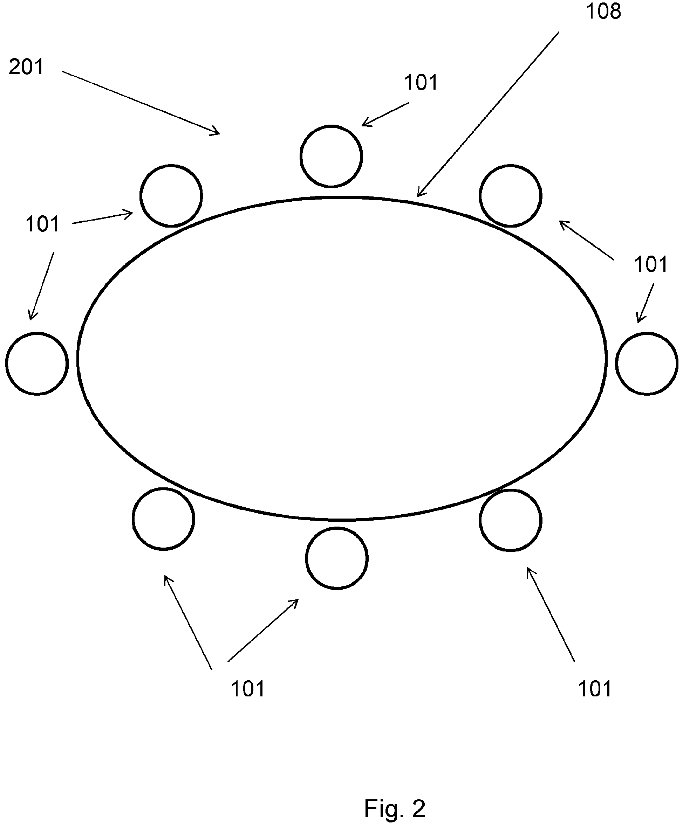

Furthermore, as can be seen from Figure 2, said systems (201) are designed with one or more lasers, each of which emits a beam of electromagnetic radiation (102) capable of increasing the temperature of the surface layer of said plate (104) and/or of the metal powder in said work surface (105), necessary to allow the reduction of laser energy to carry out additive manufacturing processes and the reduction of residual stresses of the produced object as well as to allow the first molten layer of the printed element to attach to said plate (104); in particular, the preheating by UV radiation is particularly favorable in those devices where the construction platform is a relatively thin metal block that is not firmly fixed to the moving axes, allowing to have different platforms available for printing without the need to modify the volume of construction.

Furthermore, the wavelength in the UV range, although advantageous for all metals, is particularly suitable for highly reflective materials such as copper, gold, aluminum and platinum, which have an electronic structure in which the bands absorption rates are shifted to shorter wavelengths than other materials such as iron and/or carbon-based alloys and/or steel.

The heat transfer device for additive manufacturing (100) is provided with a set of independent sources (101) that emit electromagnetic radiation (102) in the wavelength spectrum between 215 and 600 nm, said independent sources (101) with powers higher than 50 W for single unit.

Furthermore, the heat transfer device for additive manufacturing (100) is advantageously provided with an array of LEDs (301) in the UV-VIS wavelength range having an inclination angle of 35° with respect to said predetermined area (103) of said plate (104) and a power greater than 50 W. The synergy between the UV laser sources and the LED array allows to carry out pre-heating and post-processing operations of the work plate and/or of the powders based on the type of metal powder to be processed and the amount of energy required to carry out the fusion process of the layers of powder.

Furthermore, said systems (201) and (301) for heat transfer are capable of emitting a beam of electromagnetic radiation (102) in the phases of:
- pre-heating said plate (104) and/or of the metal powders;
- additive manufacturing process, or simultaneously with the emission of electromagnetic radiation from the process laser;
- post-process of additive manufacturing.

Advantageously, said independent sources (101) can be designed to carry out a rotation movement along the X and Y axes, necessary to expose the working sectors adjacent to said predetermined area (103) of said plate (104) to said electromagnetic radiation (102) during the application of additive manufacturing, as shown in figure 1. Alternatively, a beam shaping system or laser beam modifier adapts the emitted beam to the surface to be heated.

Furthermore, the irradiation of said plate (104) from said electromagnetic radiation (102) during the application of additive manufacturing by means of said independent sources (101) and/or an array of LEDs in the UV-VIS wavelength range with an inclination angle of 35° with respect to said predetermined area (103) allows carrying out additive manufacturing operations with low power laser sources with reduced residual stress and defects with greater process speed.

In accordance with the invention, the heat transfer device for additive manufacturing (100), allows the preheating and heating of the upper surface of the building platform by external radiation and during this process the newly deposited layer of powder is preheated to a high temperature, below the melting point, before processing the layer with the laser used to melt the powder.

The main advantages of using this solution concern:
- the pre-treatment that allows to work the various layers with less laser energy;
- post treatment in order to prevent the pieces made from being damaged;
- the treatment during the laser process which allows to reduce the cycle time;
- the heat treatment inherent in the workpiece;
- the reduction of residual stress and defects.

## Claims

1. Heat transfer device (100) for additive manufacturing comprising:
- a set of independent ultraviolet laser sources (101) capable of generating heat and designed to convey the electromagnetic radiation beams (102) in a predetermined area (103) of the plate (104) of a work surface (105), said independent sources (101) capable of varying the temperature of said predetermined area (103) of said plate (104) in said work surface (105) by introducing a thermal gradient, said independent sources (101) being connected to sides of the optical deflection system (108); and
- an array of ultraviolet LEDs (301) adjacent to the optical deflection system (108), capable of varying the temperature of the metal powders positioned in said work surface (105).

2. Heat transfer device (100) for additive manufacturing according to claim 1, **characterized in that** said independent sources (101) are scalable and modular in multiple systems (201) connected to the optical deflection system (108) and sized according to based on the work area, in said work plan (105), necessary to implement the additive manufacturing process.

3. Heat transfer device (100) for additive manufacturing according to claim 1, **characterized in that** said systems (201) are designed with at least 4 lasers, each of which emits a beam of electromagnetic radiation (102) capable of increasing the temperature of the surface layer of said plate (104) and/or of the metal powder in said work surface (105), necessary to allow the reduction of the laser energy to carry out additive manufacturing processes and the reduction of the residual stresses of the object product, as well as allowing the first molten layer of the molded element to attach to said plate (104).

4. Heat transfer device (100) for additive manufacturing according to claim 1, **characterized in that** said independent sources (101) emit electromagnetic radiation (102) in the wavelength spectrum between 215 and 600 nm.

5. Heat transfer device (100) for additive manufacturing according to claim 1, **characterized in that** said independent sources (101) have a power greater than 50 W per single unit.

6. Heat transfer device (100) for additive manufacturing according to claim 1, **characterized in that** said array of led (301) in the UV-VIS wavelength range has an inclination angle of 35° with respect to said predetermined area (103) of said plate (104) and a power greater than 50 W.

7. Heat transfer device (100) for additive manufacturing according to claim 1, **characterized in that** said systems (201) are designed to emit a beam of electromagnetic radiation (102) when pre-heating said plate (104) and/or the metal powders; or during additive manufacturing, or simultaneously with the emission of electromagnetic radiation from the process laser; or during a post-process of additive manufacturing.

8. Heat transfer device (100) for additive manufacturing according to claim 1, **characterized in that** said independent sources (101) are designed to carry out a rotational movement along the X and Y axes, necessary to expose the working sectors adjacent to said predetermined area (103) of said plate (104) to said electromagnetic radiation (102) during the application of additive manufacturing.

## Patentansprüche

1. Wärmeübertragungsvorrichtung (100) für die additive Fertigung, umfassend:
- eine Reihe unabhängiger Ultraviolett-Laserquellen (101), die Wärme erzeugen können und dazu bestimmt sind, die Strahlen elektromagnetischer Strahlung (102) in einen vorbestimmten Bereich (103) der Platte (104) einer Arbeitsfläche (105) zu übertragen, der als unabhängig bezeichnet wird Quellen (101), die in der Lage sind, die Temperatur des vorbestimmten Bereichs (103) der Platte (104) in der Arbeitsfläche (105) durch Einbringen zu variieren einen Wärmegradienten, wobei die unabhängigen Quellen (101) mit den Seiten des optischen Ablenksystems (108) verbunden sind; und
- eine Reihe von Ultraviolett-LEDs (301) neben dem optischen Ablenksystem (108), die in der Lage sind, die Temperatur der auf der Arbeitsfläche (105) positionierten Metallpulver zu variieren.

2. Wärmeübertragungsvorrichtung (100) für die additive Fertigung nach Anspruch 1, **dadurch gekennzeichnet, dass** die unabhängigen Quellen (101) skalierbar und modular in mehreren Systemen (201) sind, die mit dem optischen Ablenksystem (108) verbunden und auf Basis der Größe dimensioniert sind auf dem Arbeitsbereich, in dem Arbeitsplan (105), der zur Umsetzung des additiven Fertigungsverfahrens erforderlich ist.

3. Wärmeübertragungsvorrichtung (100) für die additive Fertigung nach Anspruch 1, **dadurch gekennzeichnet, dass** die Systeme (201) mit mindestens 4 Lasern ausgestattet sind, von denen jeder einen Strahl elektromagnetischer Strahlung (102) aussendet, der die Temperatur erhöhen kann der Oberflächenschicht der Platte (104) und/oder des Metallpulvers in der Arbeitsfläche (105), die erforderlich ist, um die Reduzierung der Laserenergie zur Durchführung additiver Fertigungsprozesse und die Reduzierung von zu ermöglichen Restspannungen des hergestellten Objekts sowie das Anhaften der ersten geschmolzenen Schicht des gedruckten Elements an der Platte (104).

4. Wärmeübertragungsvorrichtung (100) für die additive Fertigung nach Anspruch 1, **dadurch gekennzeichnet, dass** die unabhängigen Quellen (101) elektromagnetische Strahlung (102) im Wellenlängenspektrum zwischen 215 und 600 nm emittieren.

5. Wärmeübertragungsvorrichtung (100) für die additive Fertigung nach Anspruch 1, **dadurch gekennzeichnet, dass** die unabhängigen Quellen (101) eine Leistung von mehr als 50 W pro Einzeleinheit haben.

6. Wärmeübertragungsvorrichtung (100) für die additive Fertigung nach Anspruch 1, **dadurch gekennzeichnet, dass** das LED-Array (301) im UV-VIS-Wellenlängenbereich einen Neigungswinkel von 35° gegenüber dem vorgegebenen Bereich (103) aufweist Platte (104) und einer Leistung von mehr als 50 W.

7. Wärmeübertragungsvorrichtung (100) für die additive Fertigung nach Anspruch 1, **dadurch gekennzeichnet, dass** die Systeme (201) so ausgelegt sind, dass sie beim Vorheizen der Platte (104) und/oder der Metallpulver einen Strahl elektromagnetischer Strahlung (102) aussenden; oder während der additiven Fertigung, oder gleichzeitig mit der Emission elektromagnetischer Strahlung des Prozesslasers; oder während eines Nachbearbeitungsprozesses der additiven Fertigung.

8. Wärmeübertragungsvorrichtung (100) für die additive Fertigung nach Anspruch 1, **dadurch gekennzeichnet, dass** die unabhängigen Quellen (101) so ausgelegt sind, dass sie eine Rotationsbewegung entlang der X- und Y-Achsen ausführen, die erforderlich ist, um die an die vorbestimmten angrenzenden Arbeitssektoren freizulegen Bereich (103) der Platte (104) der elektromagnetischen Strahlung (102) während der Anwendung der additiven Fertigung.

## Revendications

1. Dispositif de transfert thermique (100) pour fabrication additive comprenant:
- un ensemble de sources laser ultraviolet (101) indépendantes capables de générer de la chaleur et conçues pour véhiculer les faisceaux de rayonnement électromagnétique (102) dans une zone prédéterminée (103) de la plaque (104) d'un plan de travail (105), dite indépendante sources (101) capables de faire varier la température de ladite zone prédéterminée (103) de ladite plaque (104) dans ladite surface de travail (105) en introduisant un gradient thermique, lesdites sources indépendantes (101) étant connectées aux côtés du système optique de déflexion (108) ; et
- un réseau de LED ultraviolettes (301) adjacent au système optique de déflexion (108), capable de faire varier la température des poudres métalliques positionnées dans ladite surface de travail (105).

2. Dispositif de transfert thermique (100) pour fabrication additive selon la revendication 1, **caractérisé par le fait que** lesdites sources indépendantes (101) sont évolutives et modulaires en systèmes multiples (201) connectés au système optique de déflexion (108) et dimensionnés en fonction sur la zone de travail, dans ledit plan de travail (105), nécessaire à la mise en oeuvre du procédé de fabrication additive.

3. Dispositif de transfert thermique (100) pour fabrication additive selon la revendication 1, **caractérisé en ce que** lesdits systèmes (201) sont conçus avec au moins 4 lasers dont chacun émet un faisceau de rayonnement électromagnétique (102) capable d'augmenter la température de la couche superficielle de ladite plaque (104) et/ou de la poudre métallique dans ladite surface de travail (105), nécessaire pour permettre la réduction de l'énergie laser pour réaliser des procédés de fabrication additive et la réduction de contraintes résiduelles de l'objet produit, ainsi que permettre à la première couche fondue de l'élément imprimé de se fixer à ladite plaque (104).

4. Dispositif de transfert thermique (100) pour fabrication additive selon la revendication 1, **caractérisé en ce que** lesdites sources indépendantes (101) émettent un rayonnement électromagnétique (102) dans le spectre de longueurs d'onde compris entre 215 et 600 nm.

5. Dispositif de transfert thermique (100) pour fabrication additive selon la revendication 1, **caractérisé en ce que** lesdites sources indépendantes (101) ont une puissance supérieure à 50 W par unité unique.

6. Dispositif de transfert thermique (100) pour fabrication additive selon la revendication 1, **caractérisé en ce que** ledit réseau de LED (301) dans la gamme de longueurs d'onde UV-VIS présente un angle d'inclinaison de 35° par rapport à ladite zone prédéterminée (103) dudit plaque (104) et une puissance supérieure à 50 W.

7. Dispositif de transfert thermique (100) pour fabrication additive selon la revendication 1, **caractérisé en ce que** lesdits systèmes (201) sont conçus pour émettre un faisceau de rayonnement électromagnétique (102) lors du préchauffage de ladite plaque (104) et/ou de poudres métalliques; soit lors de la fabrication additive, soit en même temps que l'émission du rayonnement électromagnétique du laser de procédé; ou lors d'un post-processus de fabrication additive.

8. Dispositif de transfert thermique (100) pour fabrication additive selon la revendication 1, **caractérisé en ce que** lesdites sources indépendantes (101) sont conçues pour effectuer un mouvement de rotation selon les axes X et Y, nécessaire pour exposer les secteurs de travail adjacents audit prédéterminé zone (103) de ladite plaque (104) audit rayonnement électromagnétique (102) lors de l'application de la fabrication additive.
